# EUROPÄISCHE PATENTSCHRIFT

(11) **EP 3 212 354 B1**
(45) Veröffentlichungstag und Bekanntmachung des Hinweises auf die Patenterteilung: **15.08.2018**
(21) Anmeldenummer: 15752923.1
(22) Anmeldetag: 17.08.2015
(51) Int. Cl.: B22F 3/105, B29C 67/00, B29C 64/153, B29C 64/20

(54) **VORRICHTUNG UND VERFAHREN ZUR GENERATIVEN HERSTELLUNG ZUMINDEST EINES BAUTEILBEREICHS EINES BAUTEILS**
DEVICE AND METHOD FOR THE GENERATIVE PRODUCTION OF AT LEAST ONE AREA OF A COMPONENT
DISPOSITIF ET PROCÉDÉ DESTINÉS À LA FABRICATION GÉNÉRATIVE D'AU MOINS UNE ZONE DE COMPOSANT

(30) Priorität: 30.10.2014 EP 14191030
(43) Veröffentlichungstag der Anmeldung: 06.09.2017
(73) Patentinhaber: MTU Aero Engines AG, 80995 München (DE)
(72) Erfinder: JAKIMOV, Andreas, 85777 Fahrenzhausen (DE); JAKIMOV, Nicole, 85777 Fahrenzhausen (DE)
(86) Internationale Anmeldenummer: PCT/EP2015/001687
(87) Internationale Veröffentlichungsnummer: WO 2016/066237

(56) Entgegenhaltungen:
- EP-A1- 2 431 113
- WO-A1-2005/025780
- WO-A1-2014/199150
- DE-A1-102010 052 206

## Beschreibung

Die Erfindung betrifft eine Vorrichtung zur generativen Herstellung zumindest eines Bauteilbereichs eines Bauteils, insbesondere eines Bauteils einer Strömungsmaschine gemäß dem Oberbegriff des Anspruchs 1 sowie ein Verfahren zur generativen Herstellung zumindest eines Bauteilbereichs eines Bauteils, insbesondere eines Bauteils einer Strömungsmaschine gemäß dem Oberbegriff des Anspruchs 12.

Verfahren und Vorrichtungen zur Herstellung von Bauteilen sind in einer großen Vielzahl bekannt. Insbesondere sind generative Fertigungsverfahren (sog. Rapid Manufacturing- bzw. Rapid Prototyping-Verfahren) bekannt, bei denen das Bauteil durch pulverbettbasierte, additive Fertigungsverfahren schichtweise aufgebaut wird. Vorwiegend metallische Bauteile können beispielsweise durch Laser- bzw. Elektronenstrahlschmelz- oder -sinterverfahren hergestellt werden. Dabei wird zunächst schichtweise mindestens ein pulverförmiger Bauteilwerkstoff auf eine Bauteilplattform im Bereich einer Aufbau- und Fügezone der Vorrichtung aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Hochenergiestrahls, zum Beispiel eines Elektronen- oder Laserstrahls zugeführt wird. Der Hochenergiestrahl wird dabei in Abhängigkeit einer Schichtinformation der jeweils herzustellenden Bauteilschicht gesteuert. Nach dem Verschmelzen und/oder Versintern wird die Bauteilplattform schichtweise um eine vordefinierte Schichtdicke abgesenkt. Danach werden die genannten Schritte bis zur endgültigen Fertigstellung des Bauteils wiederholt.

Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine.

Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO2-Laser, Nd:YAG-Laser, Yb-Faserlaser sowie Diodenlaser, oder durch Elektronenstrahlen.

Aus der DE 103 42 883 A1 ist ebenfalls eine Vorrichtung und ein Verfahren zur generativen Herstellung eines dreidimensionalen Formkörpers bekannt. Eine Prozesskammer der Vorrichtung umfasst dabei ein Verschlusselement, wobei das Verschlusselement einen Bereich aufweist, der für eine elektromagnetische Strahlung eines Laserstrahls durchlässig ist. Zudem sind an der Prozesskammer eine Einströmdüse und eine Absaugdüse zur Zu- und Abführung eines Schutz- oder Inertgases angeordnet. Die so entstehende Schutzgasströmung soll einerseits eine Oxidation des Werkstoffs beim Aufschmelzen vermeiden und andererseits bei dem Aufschmelzvorgang entstehende Schmauchpartikel, die den Schmelz- und/oder Sintervorgang qualitativ negativ beeinträchtigen, aus dem Bereich einer Aufbau- und Fügezone entfernen. Insbesondere wird der Laserstrahl beim Durchdringen des entstehenden Schmauchs, der sich aus Schmauchpartikeln, insbesondere Schweißspritzern und Kondensat zusammensetzt, defokussiert. Damit kommt es an den entsprechenden Stellen des herzustellenden Formkörpers zu einem verringerten Energieeintrag in das zu verschmelzende beziehungsweise versinternde Werkstoffpulver. Dies kann zu massiven Bindefehlem führen, die die Festigkeit des hergestellten Formkörpers beziehungsweise Bauteils stark mindern.

Als nachteilig an den bekannten Vorrichtungen ist der Umstand anzusehen, dass die Effektivität und Gleichmäßigkeit der Schutzgasströmung durch ein Absinken bzw. eine Veränderung der Strömungsgeschwindigkeit der Schutzgasströmung über dem Pulverbett der Aufbau- und Fügezone deutlich verringert wird. Das Absenken der Strömungsgeschwindigkeit liegt insbesondere darin begründet, dass nach Austritt des Schutzgases aus der Einströmdüse sich der Strömungsdurchschnitt in der Prozesskammer deutlich vergrößert. Zudem kommt es zu Verwirbelungen innerhalb der Prozesskammer. Wie bereits erwähnt, wird aber dadurch die Effektivität und Gleichmäßigkeit der Schutzgasströmung über der Baufläche hinsichtlich des Abtransports entstehender Schmauchpartikel deutlich reduziert. Vor allem die über die Baufläche variierende Strömung führt zu Bereichen minderer Material- beziehungsweise Bauteilqualität. Aus diesem Grund dürfen diese Bereiche bei bestimmten Anwendungen nicht bebaut werden. Die Folgen sind zudem eine drastische Verringerung der Wirtschaftlichkeit des generativen Herstellungsverfahrens.

Aus der internationalen Patentanmeldung WO 2005/025780 A1 ist eine Vorrichtung zur generativen Herstellung zumindest eines Bauteilbereichs eines Bauteils gemäß dem Oberbegriff des Anspruchs 1 bekannt. Die europäische Patentanmeldung EP 2 431 113 A1 schlägt eine Reduzierung des Gasraums vor, indem ein bewegbarer Abdeckrahmen mit einem Fenster und Gaszu- und Gasabführung oberhalb einer Hebe-/Senkrahmen angeordnet wird. Der Abdeckrahmen wird für jede Pulverschicht versetzt. Die deutsche Patentanmeldung DE 10 2010 052 206 A1 schlägt vor, zur Umlenkung des Gases eine Seitenwand zu verschieben, um die Strömungsgeschwindigkeit in Abhängigkeit der Position des Umlenkelements zu ändern.

Aufgabe der vorliegenden Erfindung ist es daher, eine Vorrichtung der eingangs genannten Art zu schaffen, die eine höhere Effektivität einer Schutzgasströmung innerhalb einer Prozesskammer der Vorrichtung gewährleistet. Des Weiteren ist es Aufgabe der vorliegenden Erfindung, ein Verfahren der eingangs genannten Art bereitzustellen, welches eine höhere Effektivität einer Schutzgasströmung innerhalb einer Prozesskammer der Vorrichtung gewährleistet.

Diese Aufgaben werden erfindungsgemäß durch eine Vorrichtung mit den Merkmalen des Patentanspruchs 1 zur generativen Herstellung zumindest eines Bauteilbereichs eines Bauteils und durch ein entsprechendes Verfahren mit den Merkmalen des Patentanspruchs 12 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung als vorteilhafte Ausgestaltungen des Verfahrens und umgekehrt anzusehen sind.

Ein erster Aspekt der Erfindung betrifft eine Vorrichtung zur generativen Herstellung zumindest eines Bauteilbereichs eines Bauteils, insbesondere eines Bauteils einer Strömungsmaschine. Die Vorrichtung umfasst dabei mindestens einen Beschichter zum Auftragen von mindestens einer Pulverschicht eines Bauteilwerkstoffs auf mindestens eine Aufbau- und Fügezone mindestens einer absenkbaren Bauteilplattform. Zudem umfasst die Vorrichtung mindestens eine Strahlungsquelle zum Erzeugen wenigstens eines Hochenergiestrahls, mittels welchem die Pulverschicht im Bereich der Aufbau- und Fügezone lokal zu einer Bauteilschicht verschmelzbar und/oder versinterbar ist. Des Weiteren umfasst die Vorrichtung mindestens eine über der Aufbau- und Fügezone angeordnete, für den Hochenergiestrahl durchlässige Platte, wobei der Abstand zwischen der Platte und der Aufbau- und Fügezone derart bemessen ist, dass der Beschichter unterhalb der Platte verfahrbar ist. Schließlich umfasst die Vorrichtung mindestens eine Einströmdüse und mindestens eine Absaugdüse oder -öffnung für ein Prozessgas, wobei die Einströmdüse und die Absaugdüse oder -öffnung derart angeordnet sind, dass ein zumindest teilweise unterhalb der Platte verlaufender Gasstrom ausgebildet wird. Erfindungsgemäß ist mindestens eine Seitenwand zur zumindest zeitweise seitlichen Begrenzung des Gasstroms zwischen der Einströmdüse und der Absaugdüse oder -öffnung unterhalb und/oder seitlich der Platte angeordnet, wobei die Seitenwand aus einer Ebene der Aufbau- und Fügezone entfernbar ausgebildet ist, insbesondere unterhalb der Ebene der Aufbau- und Fügezone versenkbar oder aus der Ebene der Aufbau- und Fügezone ausklappbar ausgebildet ist. Durch die zumindest zeitweise seitliche Begrenzung des Gasstroms durch die mindestens eine Seitenwand erfolgt eine Art Einhausung der Gasströmung zwischen der Einströmdüse und der Absaugdüse oder -öffnung. Die so gebildete Einhausung umfasst dabei mindestens die eine Seitenwand und die für den Hochenergiestrahl durchlässige Platte. Um die Überfahrt des Beschichters zu ermöglichen, ist die mindestens eine Seitenwand zudem aus der Ebene der Aufbau- und Fügezone entfernbar beziehungsweise bewegbar ausgebildet, insbesondere unterhalb der Ebene der Aufbau- und Fügezone versenkbar oder aus der Ebene der Aufbau- und Fügezone ausklappbar. Entscheidend dabei ist, dass die Überfahrt des Beschichters nicht gestört oder behindert wird. Durch die zumindest zeitweise seitliche Begrenzung des Gasstroms kann eine höhere Strömungsgeschwindigkeit des Gasstroms durch eine Begrenzung des Strömungsquerschnitts in der Prozesskammer erzielt und aufrechterhalten werden. Zudem kann eine Wirbelbildung des Gasstroms zuverlässig verhindert werden. Damit ist aber ein gleichmäßiger Abtransport des Schmauchs beziehungsweise der Schmauchpartikel über den gesamten Bereich der Aufbau- und Fügezone der Vorrichtung gewährleistet. Die Entfernbarkeit, insbesondere die Versenkbarkeit oder Ausklappbarkeit der Seitenwände ermöglicht zudem einen ungestörten und schnellen Verfahrensablauf. Dabei kann die jeweilige Seitenwand relativ zur Aufbau- und Fügezone nach oben, nach unten oder seitlich entfernt beziehungsweise bewegt werden. So ist eine Versenkbarkeit oder Ausklappbarkeit oder Umklappbarkeit unterhalb und/oder oberhalb der Aufbau- und Fügezone denkbar. Auch eine seitliche Ausklappbarkeit oder Umklappbarkeit der Seitenwand aus der Ebene beziehungsweise dem Bereich der Aufbau- und Fügezone ist denkbar. Gegebenfalls kann die Seitenwand alternierend nach oben und unten oder auf verschiedene Seiten relativ zur Aufbau- und Fügezone bewegt werden. Bei dem Prozessgas handelt es sich insbesondere um ein Schutzgas oder ein Inertgas.

In weiteren vorteilhaften Ausgestaltungen der erfindungsgemäßen Vorrichtung ist die Seitenwand parallel oder schräg zu einer Strömungsrichtung des Gasstroms angeordnet. Zudem besteht die Möglichkeit, dass die Vorrichtung zwei Seitenwände umfasst und die Seitenwände parallel zueinander oder trichterförmig oder fächerförmig ausgehend von der Einströmdüse in Richtung der Absaugdüse oder -öffnung angeordnet sind. Die Anordnung der Seitenwand beziehungsweise der Seitenwände kann sich vorteilhafterweise nach den baulichen Gegebenheiten der Prozesskammer, insbesondere der Ausgestaltung der Einströmdüse oder der Absaugdüse oder -öffnung sowie deren Anordnung innerhalb der Prozesskammer richten. Durch die Verwendung von zwei Seitenwänden, die voneinander beabstandet unterhalb und/oder seitlich der Platte angeordnet sind, erfolgt eine weitere, deutliche Verringerung des Strömungsquerschnitts des Gasstroms innerhalb der Prozesskammer der Vorrichtung. Dies führt zu einer weiteren Erhöhung der Strömungsgeschwindigkeit des Gasstroms, wobei durch die zuverlässige Verhinderung von Wirbelbildungen zudem die Gleichmäßigkeit der Strömung gewährleistet ist.

In weiteren vorteilhaften Ausgestaltungen der erfindungsgemäßen Vorrichtung ist die Seitenwand unterhalb der Platte angeordnet und derart ausgebildet, dass sie in einer Verschlussstellung an einer der Aufbau- und Fügezone zugewandten Unterseite der Platte anliegt. Insbesondere kann die Seitenwand in dieser Verschlussstellung an der Unterseite der Platte gasdicht anliegen. Durch diese Ausgestaltungsmöglichkeiten kann wiederum die Geschwindigkeit und die Gleichmäßigkeit des unterhalb der Platte verlaufenden Gasstroms erhöht werden.

In weiteren vorteilhaften Ausgestaltungen der erfindungsgemäßen Vorrichtung besteht die Platte aus Glas oder Quarzglas und der Hochenergiestrahl ist ein Laserstrahl. Zudem besteht die Möglichkeit, dass die Platte zumindest an der der Aufbau- und Fügezone zugewandten Unterseite zumindest teilweise mit einer schmutz- und schmauchabweisenden Beschichtung, insbesondere einer Nanoversiegelung, versehen ist. Durch die Nanoversiegelung, die insbesondere einen so genannten Lotusblüteneffekt bewirkt, wird gewährleistet, dass der Hochenergiestrahl, insbesondere der Laserstrahl ungehindert und insbesondere ohne eine schädliche Ablenkung aus seiner Sollrichtung beziehungsweise eine Defokussierung erfährt. Zudem besteht die Möglichkeit, dass die Platte an der der Aufbau- und Fügezone zugewandeten Unterseite und/oder der der Aufbau- und Fügezone abgewandten Oberseite zumindest teilweise mit einer Antireflexbeschichtung versehen ist.

In einer weiteren vorteilhaften Ausgestaltung der erfindungsgemäßen Vorrichtung weist die Vorrichtung mindestens eine Aufnahmeöffnung zur Aufnahme der mindestens einen versenkbaren Seitenwand auf, wobei die Aufnahmeöffnung zwischen einem Bauteilwerkstoffreservoir und der Aufbau- und Fügezone und/oder zwischen der Aufbau- und Fügezone und einem Überlaufbehälter für den Bauteilwerkstoff angeordnet ist. Durch die erfindungsgemäße Anordnung der Aufnahmeöffnungen ist eine einfache konstruktive Möglichkeit zum Versenken der Seitenwand beziehungsweise der Seitenwände unterhalb der Ebene der Aufbau- und Fügezone gegeben. Wie bereits erwähnt, ist dadurch die Überfahrt des Beschichters über die Seitenwände ermöglicht. Wie bereits erwähnt, bestehen aber weitere Möglichkeiten, die Seitenwand aus der Ebene der Aufbau- und Fügezone zu entfernen beziehungsweise zu bewegen.

In weiteren vorteilhaften Ausgestaltungen der erfindungsgemäßen Vorrichtung sind die Platte und/oder mindestens eine Seitenwand als Bestandteile einer Prozesskammer der Vorrichtung ausgebildet. Es ist aber auch möglich, dass die Platte und/oder mindestens eine Seitenwand innerhalb einer Prozesskammer der Vorrichtung ausgebildet sind. Im letztgenannten Fall sind die Platte und/oder mindestens die eine Seitenwand von entsprechenden Seitenwänden und/oder Abdeckungen der Prozesskammer beabstandet angeordnet.

Ein zweiter Aspekt der Erfindung betrifft ein Verfahren zur Herstellung zumindest eines Bauteilbereichs eines Bauteils, insbesondere eines Bauteils einer Strömungsmaschine. Das Verfahren umfasst dabei zumindest folgende Schritte:
a) Schichtweises Auftragen von mindestens einem pulverförmigen Bauteilwerkstoff mittels wenigstens einem Beschichter auf mindestens eine Bauteilplattform im Bereich einer Aufbau- und Fügezone, wobei der Beschichter relativ zu der Bauteilplattform bewegbar ist;
b) Schichtweises und lokales Verschmelzen und/oder Versintern des Bauteilwerkstoffs durch Zuführen von Energie mittels wenigstens eines Hochenergiestrahls im Bereich der Aufbau- und Fügezone zum Ausbilden einer Bauteilschicht;
c) Schichtweises Absenken der Bauteilplattform um eine vordefinierte Schichtdicke; und
d) Wiederholen der Schritte a) bis c) bis zur Fertigstellung des Bauteilbereichs.

Zudem wird vor dem schichtweisen Auftragen des pulverförmigen Bauteilwerkstoffs mittels dem Beschichter mindestens eine Seitenwand aus einer Ebene der Aufbau- und Fügezone entfernt, insbesondere unterhalb der Ebene der Aufbau- und Fügezone versenkt oder aus der Ebene der Aufbau- und Fügezone ausgeklappt, wobei nach dem schichtweisen Auftragen des pulverförmigen Bauteilwerkstoffs die Seitenwand in Richtung einer über der Aufbau- und Fügezone angeordneten, für den Hochenergiestrahl durchlässigen Platte verfahren wird und der Abstand zwischen der Platte und der Aufbau- und Fügezone derart bemessen ist, dass der Beschichter unterhalb der Platte verfahrbar ist. Dadurch ist wiederum eine zumindest zeitweise Einhausung eines Gasstroms, insbesondere eines Schutzgas- oder Inertgasstroms, der zwischen mindestens einer Einströmdüse und mindestens einer Absaugdüse oder -öffnung und zumindest teilweise unterhalb der Platte verläuft, gewährleistet. Durch die zumindest zeit- und teilweise Einhausung wird der Strömungsquerschnitt des Gasstroms in der Prozesskammer verringert, sodass sich höhere Strömungsgeschwindigkeiten ergeben. Zudem wird durch die Einhausung eine Wirbelbildung zuverlässig verhindert, sodass ein sich durch das schichtweise und lokale Verschmelzen und/oder Versintern des Bauteilwerkstoffs bildender Schmauch zuverlässig aus dem Bereich der Aufbau- und Fügezone mittels des Gasstroms abtransportiert wird. Dadurch ergibt sich eine deutliche Steigerung der Effektivität der Schutzgasströmung innerhalb der Prozesskammer und damit des erfindungsgemäßen Verfahrens. Die sich aus der Verwendung der Vorrichtung gemäß dem ersten Erfindungsaspekt ergebenden Merkmale und Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts anzusehen sind.

In weiteren vorteilhaften Ausgestaltungen des erfindungsgemäßen Verfahrens ist die Seitenwand parallel oder schräg zu einer Strömungsrichtung des Gasstroms zwischen mindestens einer Einströmdüse und mindestens einer Absaugdüse oder -öffnung für ein Prozessgas angeordnet. Des Weiteren besteht die Möglichkeit, dass zwei Seitenwände ausgehend von mindestens einer Einströmdüse in Richtung mindestens einer Absaugdüse oder -öffnung parallel zueinander oder trichterförmig oder fächerförmig versenkt und ausgefahren werden. Des Weiteren besteht die Möglichkeit, dass die Seitenwand unterhalb der Platte angeordnet ist und in einer Verschlussstellung an einer der Aufbau- und Fügezone zugewandten Unterseite der Platte anliegt. Durch die erfindungsgemäßen Ausgestaltungsmöglichkeiten kann das Verfahren an eine Vielzahl konstruktiver Vorgaben angepasst werden. Zudem wird die Effektivität des erfindungsgemäßen Verfahrens durch die zumindest zeitweise deutliche Begrenzung und Einhausung des Gasstroms bewirkt.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Schnittdarstellung einer erfindungsgemäße Vorrichtung zur Herstellung zumindest eines Bauteilbereichs eines Bauteils; und
- Fig. 2: eine schematische Darstellung eines Teilbereichs der Vorrichtung gemäß Figur 1.

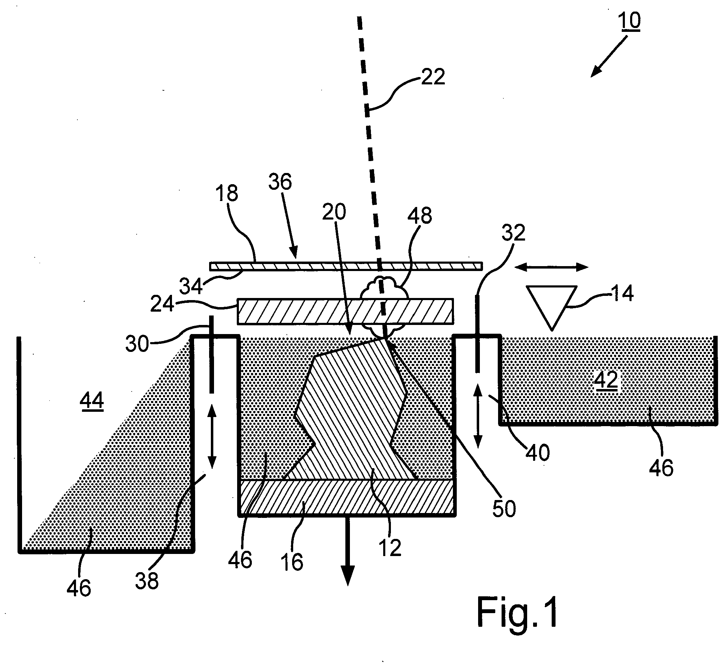

Fig. 1 zeigt eine schematische Schnittdarstellung auf eine Vorrichtung 10 zur generativen Herstellung zumindest eines Bauteilbereichs eines Bauteils 12, insbesondere eines Bauteils 12 einer Strömungsmaschine. Insbesondere kann es sich dabei um ein Bauteil einer Turbine oder eines Verdichters eines Flugtriebwerks handeln. Die Vorrichtung 10 weist dabei einen Beschichter 14 zum Auftrag von mindestens einer Pulverschicht eines Bauteilwerkstoffs 46 auf zumindest eine Aufbau- und Fügezone 20 einer absenkbaren Bauteilplattform 16 (siehe Pfeil) auf. Der Beschichter 14 ist mittels einer Verfahreinheit (nicht dargestellt) verfahrbar. Die Bewegung des Beschichters 14 erfolgt dabei über und entlang der Bauteilplattform 16 beziehungsweise der der Aufbau- und Fügezone 20 (siehe Doppelpfeil über Beschichter 14), so dass ein gleichmäßiger und schichtweiser Auftrag des pulverförmigen Bauteilwerkstoffs 46 auf die Bauteilplattform 16 möglich ist.

Der Bauteilwerkstoff 46 in dem dargestellten Ausführungsbeispiel pulverförmig ausgebildet. Insbesondere handelt es sich um ein Pulver aus Metall oder einer Metalllegierung. Es besteht aber auch die Möglichkeit, dass in anderen Ausführungsbeispielen weitere Werkstoffe wie zum Beispiel Keramik oder Kunststoff oder eine Mischung aus Metall, Metalllegierung, Keramik oder Kunststoff verwendet wird. Zudem besteht die Möglichkeit, dass der Werkstoff nicht nur pulverförmig, sondern auch pastös oder flüssig aufgebildet sein kann. Gegebenenfalls werden bei Verwendung derartiger Bauteilwerkstoffe andere Auftragsverfahren mittels des Beschichters angewandt.

Die Vorrichtung 10 umfasst des Weiteren mindestens eine Strahlungsquelle (nicht dargestellt) zum Erzeugen eines Hochenergiestrahls 22, mittels welchem die Pulverschicht im Bereich der Aufbau- und Fügezone 20 lokal unter Ausbildung eines Schmelzbades 50 zu einer Bauteilschicht verschmelzbar und/oder versinterbar ist. In dem dargestellten Ausführungsbeispiel handelt es sich bei dem Hochenergiestrahl 22 um einen Laserstrahl. Es ist aber auch denkbar Elektronenstrahlen zu verwenden. Des Weiteren erkennt man, dass über der Aufbau- und Fügezone 20 eine für den Hochenergiestrahl 22 durchlässige Platte 18 angeordnet ist. Dabei ist der Abstand zwischen der Platte 18 und der Aufbau- und Fügezone 20 derart bemessen, dass der Beschichter 14 unterhalb der Platte 18 verfahrbar ist. Die Platte 18 kann dabei aus Glas oder Quarzglas bestehen und ist zumindest an der der Aufbau- und Fügezone 20 zugewandten Unterseite 34 mit einer schmutz- und schmauchabweisenden Beschichtung, insbesondere einer Nanoversiegelung, versehen. Zudem weist in dem dargestellten Ausführungsbeispiel eine der Aufbau- und Fügezone 20 abgewandte Oberseite 36 der Platte 18 eine Antireflexbeschichtung auf. Durch die schmutz- und schmauchabweisende Beschichtung auf der dem Schmelzbad 50 beziehungsweise der Aufbau- und Fügezone 20 zugewandten Seite ist die Platte 18 gegen Verschmutzung durch den über dem Schmelzbad entstehenden Schmauch 48, der sich üblicherweise aus Schweißspritzern beziehungsweise Schmauchpartikeln und Kondensat zusammensetzt, geschützt.

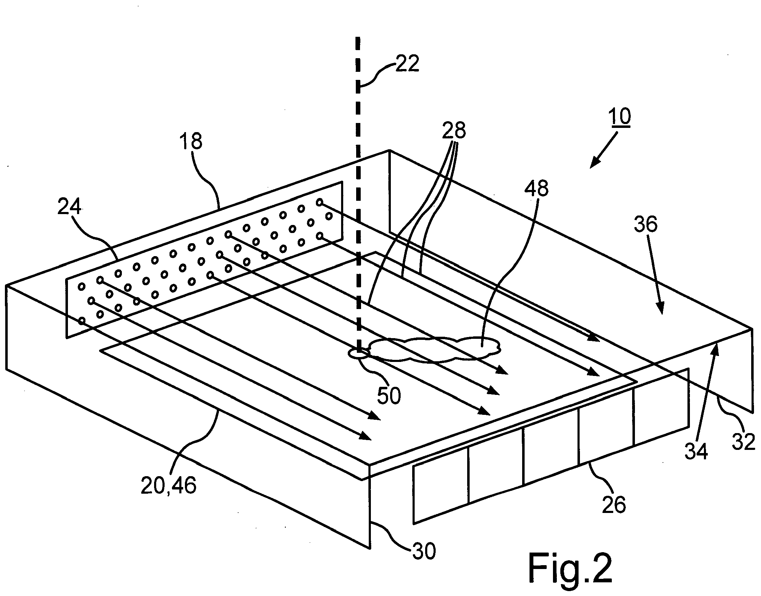

Des Weiteren umfasst die Vorrichtung 10 eine Einströmdüse 24, die in dem dargestellten Ausführungsbeispiel als Einströmleiste mit einer Vielzahl von Einströmöffnungen ausgebildet ist. Über die Einströmdüse 24 wird ein Prozessgas in eine Prozesskammer der Vorrichtung 10 eingeleitet. Bei dem Prozessgas handelt es sich insbesondere um ein Schutz- oder Inertgas. Zudem umfasst die Vorrichtung 10 mindestens eine Absaugdüse oder -öffnung 26 'zur Absaugung des Prozessgases (siehe Fig. 2). Zwischen der Einströmdüse 24 und der Absaugdüse oder -öffnung 26 wird ein zumindest teilweise unterhalb der Platte 18 verlaufender Gasstrom 28 ausgebildet (vergleiche Fig. 2). Zur zumindest zeitweise seitlichen Begrenzung des Gasstroms 28 zwischen der Einströmdüse 24 und der Absaugdüse oder -öffnung 26 weist die Vorrichtung 10 gemäß der dargestellten Ausführungsform zwei Seitenwände 30, 32 auf, die an den seitlichen Rändern der Platte 18 unterhalb der Platte 18 angeordnet sind und zudem unterhalb einer Ebene der Aufbau- und Fügezone 20 versenkbar sind. Hierzu weist die dargestellte Vorrichtung 10 jeweils eine Aufnahmeöffnung 38, 40 zur Aufnahme der jeweiligen Seitenwand 30, 32 auf. Dabei ist eine erste Aufnahmeöffnung 38 zwischen einem Bauteilwerkstoffreservoir 42 und der Aufbau- und Fügezone 20 und eine zweite Aufnahmeöffnung 40 zwischen der Aufbau- und Fügezone 20 und einem Überlaufbehälter 44 für den Bauteilwerkstoff 46 angeordnet. Des Weiteren besteht die Möglichkeit, dass die Seitenwände 30, 32 jalousienartig ausgebildet sind und in den entsprechenden Aufnahmeöffnungen 38, 40 versenkbar sind. Durch die Versenkbarkeit der Seitenwände 30, 32 unterhalb der Ebene der Aufbau- und Fügezone 20 ist es möglich, dass der Beschichter 14 ohne Weiteres die Aufnahmeöffnungen 38, 40 mit den entsprechenden Seitenwänden 30, 32 überfahren kann, sodass der Auftrag der Pulverschicht des Bauteilwerkstoffs 46 auf die Aufbau- und Fügezone 20 ungestört erfolgen kann. Nach dem Auftrag der Pulverschicht des Bauteilwerkstoffs 46 werden die Seitenwände 30, 32 in Richtung der durchlässigen Platte 18 verfahren, sodass es zu einer seitlichen Begrenzung des Gasstroms 28 unterhalb der Platte 18 kommt. Die Seitenwände 30, 32 und die Platte 18 bilden in diesem Verfahrensstadium beziehungsweise in dieser Verschlussstellung eine Einhausung für den Gasstrom 28 aus. Dies ist auch in Fig. 2 deutlich dargestellt. Des Weiteren erkennt man, dass die Seitenwände 30, 32 parallel zueinander ausgehend von der Einströmdüse 24 in Richtung der Absaugdüse oder -öffnung 26 angeordnet sind. Auch andere Anordnungen der Seitenwände 30, 32 sind denkbar. Die Versenkbarkeit der Seitenwände 30, 32 in den Aufnahmeöffnungen 38, 40 ist mittels entsprechender Doppelpfeile dargestellt.

In dem dargestellten Ausführungsbeispiel sind die Platte 18 und die Seitenwände 30, 32 innerhalb einer Prozesskammer (nicht dargestellt) der Vorrichtung 10 ausgebildet. Es besteht aber auch die Möglichkeit, dass die Platte 18 und/oder mindestens eine Seitenwand 30, 32 als Bestandteil dieser Prozesskammer der Vorrichtung 10 ausgebildet sind.

Fig. 2 zeigt eine schematische Darstellung eines Teilbereichs der Vorrichtung 10 gemäß Fig. 1. Man erkennt, dass die Seitenwände 30, 32 mit der Platte 18 eine Einhausung für den von der Einströmdüse beziehungsweise Einströmleiste 24 ausgehenden Gasstrom 28 bilden. Der Gasstrom 28 verläuft zwischen der Einströmdüse 24 und der Absaugdüse oder -öffnung 26 und unterhalb der Platte 18. Die Absaugdüse oder -öffnung 26 ist in dem dargestellten Ausführungsbeispiel als Absaugleiste mit mehreren Absaugöffnungen ausgebildet. Des Weiteren erkennt man, dass in dem dargestellten Verfahrensschritt die Seitenwände 30, 32 seitlich unterhalb der Platte 18 an der der Aufbau- und Fügezone 20 zugewandten Unterseite 34 anliegen. In der gezeigten Verschlussstellung liegen die Seitenwände 30, 32 gasdicht an der Unterseite 34 der Platte 18 an. Wie bereits in Fig. 1 dargestellt, sind die Seitenwände 30, 32 parallel zueinander angeordnet. Zudem verlaufen die Seitenwände 30, 32 ungefähr parallel zu der Strömungsrichtung des Gasstroms 28 zwischen der Einströmdüse 24 und der Absaugdüse oder -öffnung 26. Man erkennt, dass die Platte 18 für den Laserstrahl 22 durchlässig ausgebildet ist und beim Auftreffen auf das Pulverbett beziehungsweise den Bauteilwerkstoff 46 lokal das Schmelzbad 50 sowie der Schmauch 48 entsteht. Durch die an der Unterseite 34 angeordnete schmutz- und schmauchabweisende Beschichtung ist die Platte 18 gegenüber schädlichen Schmauchablagerungen wirksam geschützt.

**Bezugszeichenliste**

| | |
|---|---|
| Vorrichtung | 10 |
| Bauteil | 12 |
| Beschichter | 14 |
| Bauteilplattform | 16 |
| Platte | 18 |
| Aufbau- und Fügezone | 20 |
| Hochenergiestrahl | 22 |
| Einströmdüse | 24 |
| Absaugdüse oder-öffnung | 26 |
| Gasstrom | 28 |
| Seitenwand | 30 |
| Seitenwand | 32 |
| Unterseite | 34 |
| Oberseite | 36 |
| Aufnahmeöffnung | 38 |
| Aufnahmeöffnung | 40 |
| Bauteilwerkstoffreservoir | 42 |
| Überlaufbehälter | 44 |
| Bauteilwerkstoff | 46 |
| Schmauch | 48 |
| Schmelzbad | 50 |

## Patentansprüche

1. Vorrichtung (10) zur generativen Herstellung zumindest eines Bauteilbereichs eines Bauteils (12), insbesondere eines Bauteils (12) einer Strömungsmaschine, umfassend:
- mindestens einen Beschichter (14) zum Auftrag von mindestens einer Pulverschicht eines Bauteilwerkstoffs (46) auf mindestens eine Aufbau- und Fügezone (20) mindestens einer absenkbaren Bauteilplattform (16);
- mindestens eine Strahlungsquelle zum Erzeugen wenigstens eines Hochenergiestrahls (22), mittels welchem die Pulverschicht im Bereich der Aufbau- und Fügezone (20) lokal zu einer Bauteilschicht verschmelzbar und/oder versinterbar ist;
- mindestens einer über der Aufbau- und Fügezone (20) angeordneten, für den Hochenergiestrahl (22) durchlässigen Platte (18), wobei der Abstand zwischen der Platte (18) und der Aufbau- und Fügezone (20) derart bemessen ist, dass der Beschichter (14) unterhalb der Platte (18) verfahrbar ist; und
- mindestens einer Einströmdüse (24) und mindestens einer Absaugdüse oder -öffnung (26) für ein Prozessgas, wobei die Einströmdüse (24) und die Absaugdüse oder -öffnung (26) derart angeordnet sind, dass ein zumindest teilweise unterhalb der Platte (18) verlaufender Gasstrom (28) ausgebildet wird,
**dadurch gekennzeichnet, dass**
mindestens eine Seitenwand (30, 32) zur zumindest zeitweise seitlichen Begrenzung des Gasstroms (28) zwischen der Einströmdüse (24) und der Absaugdüse oder -öffnung (26) unterhalb und/oder seitlich der Platte (18) angeordnet ist, wobei die Seitenwand (30, 32) aus einer Ebene der Aufbau- und Fügezone (20) entfernbar ausgebildet ist.

2. Vorrichtung (10) nach Anspruch 1,
**dadurch gekennzeichnet, dass**
die Seitenwand (30, 32) parallel oder schräg zu einer Strömungsrichtung des Gasstroms (28) angeordnet ist.

3. Vorrichtung (10) nach Anspruch 1,
**dadurch gekennzeichnet, dass**
die Vorrichtung (10) zwei Seitenwände (30, 32) umfasst, wobei die Seitenwände (30, 32) parallel zueinander oder trichterförmig oder fächerförmig ausgehend von der Einströmdüse (24) in Richtung der Absaugdüse oder -öffnung (26) angeordnet sind.

4. Vorrichtung (10) nach einem der vorhergehenden Ansprüche,
**dadurch gekennzeichnet, dass**
die Seitenwand (30, 32) unterhalb der Platte (18) angeordnet ist und derart ausgebildet ist, dass sie in einer Verschlussstellung an einer der Aufbau- und Fügezone (20) zugewandten Unterseite (34) der Platte (18) anliegt.

5. Vorrichtung (10) nach Anspruch 4,
**dadurch gekennzeichnet, dass**
die Seitenwand (30, 32) in der Verschlussstellung an der Unterseite (34) der Platte (18) gasdicht anliegt.

6. Vorrichtung (10) nach einem der vorhergehenden Ansprüche,
**dadurch gekennzeichnet, dass**
die Platte (18) aus Glas oder Quarzglas besteht und der Hochenergiestrahl (22) ein Laserstrahl ist.

7. Vorrichtung (10) nach einem der vorhergehenden Ansprüche,
**dadurch gekennzeichnet, dass**
die Platte (18) zumindest an der der Aufbau- und Fügezone (20) zugewandten Unterseite (34) zumindest teilweise mit einer schmutz- und schmauchabweisenden Beschichtung, insbesondere einer Nanoversiegelung, versehen ist.

8. Vorrichtung (10) nach einem der vorhergehenden Ansprüche,
**dadurch gekennzeichnet, dass**
die Platte (18) an der der Aufbau- und Fügezone (20) zugewandten Unterseite (34) und/oder der der Aufbau- und Fügezone (20) abgewandten Oberseite (36) zumindest teilweise mit einer Antireflexbeschichtung versehen ist.

9. Vorrichtung (10) nach einem der vorhergehenden Ansprüche,
**dadurch gekennzeichnet, dass**
die Vorrichtung (10) mindestens eine Aufnahmeöffnung (38, 40) zur Aufnahme der mindestens einen versenkbaren Seitenwand (30, 32) aufweist und die Aufnahmeöffnung (38, 40) zwischen einem Bauteilwerkstoffreservoir (42) und der Aufbau- und Fügezone (20) und/oder zwischen der Aufbau- und Fügezone (20) und einem Überlaufbehälter (44) für den Bauteilwerkstoff (46) angeordnet ist.

10. Vorrichtung (10) nach einem der vorhergehenden Ansprüche,
**dadurch gekennzeichnet, dass**
die Platte (18) und/oder mindestens eine Seitenwand (30, 32) als Bestandteile einer Prozesskammer der Vorrichtung (10) ausgebildet sind.

11. Vorrichtung (10) nach einem der Ansprüche 1 bis 9,
**dadurch gekennzeichnet, dass**
die Platte (18) und/oder mindestens eine Seitenwand (30, 32) innerhalb einer Prozesskammer der Vorrichtung (10) ausgebildet sind.

12. Verfahren zur Herstellung zumindest eines Bauteilbereichs eines Bauteils (12), insbesondere eines Bauteils (12) einer Strömungsmaschine, zumindest folgende Schritte umfassend:
a) Schichtweises Auftragen von mindestens einem pulverförmigen Bauteilwerkstoff (46) mittels mindestens einem Beschichter (14) auf mindestens eine Bauteilplattform (16) im Bereich einer Aufbau- und Fügezone (20), wobei der Beschichter (14) relativ zu der Bauteilplattform (16) bewegbar ist;
b) Schichtweises und lokales Verschmelzen und/oder Versintern des Bauteilwerkstoffs (46) durch Zuführen von Energie mittels wenigstens eines Hochenergiestrahls (22) im Bereich der Aufbau- und Fügezone (20) zum Ausbilden einer Bauteilschicht;
c) Schichtweises Absenken der Bauteilplattform (16) um eine vordefinierte Schichtdicke; und
d) Wiederholen der Schritte a) bis c) bis zur Fertigstellung des Bauteilbereichs,
**dadurch gekennzeichnet, dass**
vor dem schichtweisen Auftragen des pulverförmigen Bauteilwerkstoffs (46) mittels dem Beschichter (14) mindestens eine Seitenwand (30, 32) aus einer Ebene der Aufbau- und Fügezone (20) entfernt wird, insbesondere unterhalb der Ebene der Aufbau- und Fügezone (20) versenkt oder aus der Ebene der Aufbau- und Fügezone (20) ausgeklappt wird, und nach dem schichtweisen Auftragen des pulverförmigen Bauteilwerkstoffs (46) die Seitenwand (30, 32) in Richtung einer über der Aufbau- und Fügezone (20) angeordneten, für den Hochenergiestrahl durchlässigen Platte (18) verfahren wird, wobei der Abstand zwischen der Platte (18) und der Aufbau- und Fügezone (20) derart bemessen ist, dass der Beschichter (14) unterhalb der Platte (18) verfahrbar ist.

13. Verfahren nach Anspruch 12,
**dadurch gekennzeichnet, dass**
die Seitenwand (30, 32) parallel oder schräg zu einer Strömungsrichtung eines Gasstroms (28) zwischen mindestens einer Einströmdüse (24) und mindestens einer Absaugdüse oder -öffnung (26) für ein Prozessgas angeordnet ist.

14. Verfahren nach Anspruch 12,
**dadurch gekennzeichnet, dass**
zwei Seitenwände (30, 32) ausgehend von mindestens einer Einströmdüse (24) in Richtung mindestens einer Absaugdüse oder -öffnung (26) parallel zueinander oder trichterförmig oder fächerförmig versenkt und ausgefahren werden.

15. Verfahren nach einem der Ansprüche 12 bis 14,
**dadurch gekennzeichnet, dass**
die Seitenwand (30, 32) unterhalb der Platte (18) angeordnet ist und in einer Verschlussstellung an einer der Aufbau- und Fügezone (20) zugewandten Unterseite (34) der Platte (18) anliegt.

## Claims

1. Device (10) for generatively producing at least one component region of a component (12), in particular of a component (12) of a turbomachine, the device comprising:
- at least one coater (14) for applying at least one powder layer of a component material (46) to at least one assembly and joining zone (20) of at least one lowerable component platform (16);
- at least one radiation source for generating at least one high-energy beam (22), by means of which beam the powder layer can be melted and/or sintered locally in the region of the assembly and joining zone (20) to form a component layer;
- at least one plate (18) that is arranged above the assembly and joining zone (20) and is permeable to the high-energy beam (22), the distance between the plate (18) and the assembly and joining zone (20) being calculated such that the coater (14) can be moved below the plate (18); and
- at least one inflow nozzle (24) and at least one suction nozzle or opening (26) for a process gas, the inflow nozzle (24) and the suction nozzle or opening (26) being arranged such that a gas flow (28) is formed which runs below the plate (18) at least in part,
**characterized in that** at least one lateral wall (30, 32) is arranged below and/or to the side of the plate (18) for delimiting the gas flow (28) between the inflow nozzle (24) and the suction nozzle or opening (26) at least intermittently, the lateral wall (30, 32) being designed such that it can be removed from a plane of the assembly and joining zone (20).

2. Device (10) according to claim 1, **characterized in that** the lateral wall (30, 32) is arranged in parallel with or diagonally with respect to a flow direction of the gas flow (28).

3. Device (10) according to claim 1, **characterized in that** the device (10) comprises two lateral walls (30, 32), the lateral walls (30, 32) being arranged in parallel with one another or in a funnel shape or in a fan shape proceeding from the inflow nozzle (24) toward the suction nozzle or opening (26).

4. Device (10) according to any of the preceding claims, **characterized in that** the lateral wall (30, 32) is arranged below the plate (18) and designed so as to abut a lower face (34) of the plate (18) that faces the assembly and joining zone (20) when in a closed position.

5. Device (10) according to claim 4, **characterized in that** the lateral wall (30, 32) abuts the lower face (34) of the plate (18) in a gastight manner when in the closed position.

6. Device (10) according to any of the preceding claims, **characterized in that** the plate (18) consists of glass or silica glass and the high-energy beam (22) is a laser beam.

7. Device (10) according to any of the preceding claims, **characterized in that** the plate (18) is provided at least in part with a dirt-repellent and smoke-repellent coating, in particular a nano sealant, at least on the lower face (34) facing the assembly and joining zone (20).

8. Device (10) according to any of the preceding claims, **characterized in that** the plate (18) is provided at least in part with an anti-reflective coating on the lower face (34) facing the assembly and joining zone (20) and/or on the upper face (36) facing away from the assembly and joining zone (20).

9. Device (10) according to any of the preceding claims, **characterized in that** the device (10) comprises at least one receiving opening (38, 40) for receiving the at least one lowerable lateral wall (30, 32), and the receiving opening (38, 40) is arranged between a component material reservoir (42) and the assembly and joining zone (20) and/or between the assembly and joining zone (20) and an overflow container (44) for the component material (46).

10. Device (10) according to any of the preceding claims, **characterized in that** the plate (18) and/or at least one lateral wall (30, 32) are designed as constituent parts of a process chamber of the device (10).

11. Device (10) according to any of claims 1 to 9, **characterized in that** the plate (18) and/or at least one lateral wall (30, 32) are inside a process chamber of the device (10).

12. Method for producing at least one component region of a component (12), in particular of a component (12) of a turbomachine, comprising at least the following steps:
a) applying at least one powdered component material (46) in layers to at least one component platform (16) in the region of an assembly and joining zone (20) by means of at least one coater (14), it being possible to move the coater (14) relative to the component platform (16);
b) melting and/or sintering the component material (46) in layers and locally by supplying energy by means of at least one high-energy beam (22) in the region of the assembly and joining zone (20) in order to form a component layer;
c) lowering the component platform (16) in layers to a predefined layer thickness; and
d) repeating steps a) to c) until the component region is completed,
**characterized in that**
prior to the powdered component material (46) being applied in layers by means of the coater (14), at least one lateral wall (30, 32) is removed from a plane of the assembly and joining zone (20), in particular lowered below the plane of the assembly and joining zone (20) or folded out of the plane of the assembly and joining zone (20), and, after the powdered component material (46) has been applied in layers, the lateral wall (30, 32) is moved toward a plate (18) that is arranged over the assembly and joining zone (20) and is permeable to the high-energy beam, the distance between the plate (18) and the assembly and joining zone (20) being calculated such that the coater (14) can be moved below the plate (18).

13. Method according to claim 12, **characterized in that** the lateral wall (30, 32) is arranged in parallel with or diagonally with respect to a flow direction of a gas flow (28) between at least one inflow nozzle (24) and at least one suction nozzle or opening (26) for a process gas.

14. Method according to claim 12, **characterized in that** two lateral walls (30, 32) are lowered and extended in parallel with one another or in a funnel shape or in a fan shape, proceeding from at least one inflow nozzle (24) toward at least one suction nozzle or opening (26).

15. Method according to any of claims 12 to 14, **characterized in that** the lateral wall (30, 32) is arranged below the plate (18) and abuts a lower face (34) of the plate (18) that faces the assembly and joining zone (20) when in a closed position.

## Revendications

1. Dispositif (10) de fabrication générative d'au moins une zone de composant d'un composant (12), en particulier d'un composant (12) d'une turbomachine, comprenant :
- au moins un système de revêtement (14) pour l'application d'au moins une couche de poudre d'un matériau de composant (46) sur au moins une zone de structuration et de jonction (20) d'au moins une plate-forme de composant (16) pouvant descendre ;
- au moins une source de rayonnement pour générer au moins un rayon à haute énergie (22) au moyen duquel la couche de poudre peut être fondue et/ou frittée localement au niveau de la zone de structuration et de jonction (20) pour former une couche de composant ;
- au moins une plaque (18) disposée sur la zone de structuration et de jonction (20) et perméable au rayonnement à haute énergie (22), la distance entre la plaque (18) et la zone de structuration et de jonction (20) étant dimensionnée de manière à ce que le système de revêtement (14) soit déplaçable en dessous de la plaque (18) ; et
- au moins une buse d'afflux (24) et au moins une buse ou une ouverture d'aspiration (26) pour un gaz de traitement, la buse d'afflux (24) et la buse ou l'ouverture d'aspiration (26) étant disposées de manière à ce qu'un flux de gaz (28) s'étendant du moins partiellement en-dessous de la plaque (18) soit constitué,
caractérisé en ce
au moins une paroi latérale (30, 32) servant à limiter latéralement du moins temporairement le flux de gaz (28) est disposée entre la buse d'afflux (24) et la buse ou l'ouverture d'aspiration (26) en-dessous et/ou à côté de la plaque (18), la paroi latérale (30, 32) étant conçue pour pouvoir être retirée d'un plan de la zone de structuration et de jonction (20).

2. Dispositif (10) selon la revendication 1,
**caractérisé en ce que**
la paroi latérale (30, 32) est disposée parallèlement ou obliquement par rapport à un sens d'écoulement du flux de gaz (18).

3. Dispositif (10) selon la revendication 1,
**caractérisé en ce que**
le dispositif (10) comprend deux parois latérales (30, 32), les parois latérales (30, 32) étant disposées parallèlement l'une à l'autre ou en partant en forme d'entonnoir ou en forme de compartiment de la buse d'afflux (24) en direction de la buse ou de l'ouverture d'aspiration (26).

4. Dispositif (10) selon une des revendications précédentes,
**caractérisé en ce que**
la paroi latérale (30, 32) est disposée en dessous de la plaque (18) et est conçue de manière à reposer, dans une position de fermeture, au niveau d'une face inférieure (34) tournée vers la zone de structuration et de jonction (20) de la plaque (18).

5. Dispositif (10) selon la revendication 4,
**caractérisé en ce que**
la paroi latérale (30, 32) repose de manière étanche au gaz dans sa position de fermeture au niveau de la face inférieure (34) de la plaque (18).

6. Dispositif (10) selon une des revendications précédentes,
**caractérisé en ce que**
la plaque (18) est composée de verre ou de verre de quartz et que le rayon à haute énergie (22) est un rayon laser.

7. Dispositif (10) selon une des revendications précédentes,
**caractérisé en ce que**
la plaque (18) est pourvue du moins partiellement d'un revêtement repoussant la saleté et les impuretés, en particulier d'un nanoscellement, au niveau de sa face inférieure tournée vers la zone de structuration et de jonction (20).

8. Dispositif (10) selon une des revendications précédentes,
**caractérisé en ce que**
la plaque (18) est pourvue du moins partiellement d'un revêtement anti-réfléchissant au niveau de sa face inférieure (34) tournée vers la zone de structuration et de jonction (20) et/ou de sa face supérieure (36) détournée de la zone de structuration et de jonction (20).

9. Dispositif (10) selon une des revendications précédentes,
**caractérisé en ce que**
le dispositif (10) présente au moins un orifice récepteur (38, 40) destiné à recevoir l'au moins une paroi latérale pouvant descendre (30, 32) et que l'orifice récepteur (38, 40) est disposé entre un réservoir de matériau de composant (42) et la zone de structuration et de jonction (20) et/ou entre la zone de structuration et de jonction (20) et un réservoir de trop-plein (44) pour le matériau de composant (46).

10. Dispositif (10) selon une des revendications précédentes,
**caractérisé en ce que**
la plaque (18) et/ou au moins une paroi latérale (30, 32) sont réalisées sous forme de composantes d'une chambre de traitement du dispositif (10).

11. Dispositif (10) selon une des revendications 1 à 9,
**caractérisé en ce que**
la plaque (18) et/ou au moins une paroi latérale (30, 32) sont réalisées à l'intérieur d'une chambre de traitement du dispositif (10).

12. Procédé de fabrication d'au moins une zone de composant d'un composant (12), en particulier d'un composant (12) d'une turbomachine, comprenant au moins les étapes suivantes :
a) application en couche d'au moins un matériau pulvérulent de composant (46) au moyen d'au moins un système de revêtement (14) sur au moins une plate-forme de composant (16) au niveau d'une zone de structuration et de jonction (20), le système de revêtement (14) étant mobile par rapport à la plate-forme de composant (16) ;
b) fusion et/ou frittage en couche et local du matériau de composant (46) par apport d'énergie au moyen d'au moins un rayon à haute énergie (22) au niveau de la zone de structuration et de jonction (20) pour former une couche de composant ;
c) descente en couche de la plate-forme de composant (16) à raison d'une épaisseur de couche prédéfinie ; et
d) répétition des étapes a) à c) jusqu'à l'achèvement de la zone de composant, **caractérisé en ce que**,
avant l'application en couche du matériau pulvérulent de composant (46) au moyen du système de revêtement (14), au moins une paroi latérale (30, 32) est retirée d'un plan de la zone de structuration et de jonction (20), en particulier en-dessous du plan de la zone de structuration et de jonction (20), ou est déployée à partir du plan de la zone de structuration et de jonction (20) et, après l'application en couche du matériau pulvérulent de composant (46), la paroi latérale (30, 32) est déplacée en direction d'une plaque (18) disposée au-dessus de la zone de structuration et de jonction (20) et perméable au rayonnement à haute énergie, la distance entre la plaque (18) et la zone de structuration et de jonction (20) étant dimensionnée de manière à ce que le système de revêtement (14) soit déplaçable en dessous de la plaque (18).

13. Procédé selon la revendication 12,
**caractérisé en ce que**
la paroi latérale (30, 32) est disposée parallèlement ou obliquement par rapport à un sens d'écoulement d'un flux de gaz (28) entre au moins une buse d'afflux (24) et au moins une buse ou ouverture d'aspiration (26) pour un gaz de traitement.

14. Procédé selon la revendication 12,
**caractérisé en ce que**
deux parois latérales (30, 32) partant d'au moins une buse d'afflux (24) sont descendues et sorties en direction d'au moins une buse ou ouverture d'aspiration (26) parallèlement l'une à l'autre en forme d'entonnoir ou en forme de compartiment.

15. Procédé selon une des revendications 12 à 14,
**caractérisé en ce que**
la paroi latérale (30, 32) est disposée en dessous de la plaque (18) et repose en position de fermeture au niveau d'une face inférieure (34) tournée vers la zone de structuration et de jonction (20) de la plaque (18).
